**Europäisches Patentamt**

(19) **European Patent Office**

**Office européen des brevets**

(11) Numéro de publication: **0 148 077**
**B1**

(12) # FASCICULE DE BREVET EUROPÉEN

(45) Date de publication du fascicule du brevet:
10.05.89

(51) Int. Cl.⁴: **G 11 B 5/596,** G 11 B 5/012,
G 11 B 21/08

(21) Numéro de dépôt: **84402672.4**

(22) Date de dépôt: **20.12.84**

(54) Procédé d'écriture d'informations sur un support d'enregistrement.

(30) Priorité: **30.12.83 FR 8321064**

(43) Date de publication de la demande:
**10.07.85 Bulletin 85/28**

(45) Mention de la délivrance du brevet:
**10.05.89 Bulletin 89/19**

(84) Etats contractants désignés:
**DE FR GB IT NL SE**

(56) Documents cité:
**GB-A-1 020 747**
**US-A-4 388 655**

**PATENTS ABSTRACTS OF JAPAN, vol. 6, no. 6, 7 février 1982, page 53 P 102; & JP - A - 56 145 567 (MITSUBISHI DENKI K.K.) 12.11.1981**
**IBM TECHNICAL DISCLOSURE BULLETIN, vol. 26, no. 5, octobre 1983, pages 2225-2227, New York, US; P.T. FAIRCHILD: "Four-bar linkage radial head movement"**
**PATENTS ABSTRACTS OF JAPAN, vol. 6, no. 2, janvier 1982, page 91 P 96; & JP - A - 56 127 980 (MITSUBISHI DENKI K.K.) 07.10.1981**
**PATENTS ABSTRACTS OF JAPAN, vol. 2, no. 13, 28 janvier 1978, page 10706 E 77; & JP - A - 52 130 313 (FUJITSU K.K.) 01.11.1977**

(73) Titulaire: **BULL S.A., 121, Avenue de Malakoff, F-75116 Paris (FR)**

(72) Inventeur: **Maury, Christian, 10, rue Farman, F-78190 Voisins- le- Bretonneux (FR)**
Inventeur: **Pinson, Denis, Chemin de la Justice Goupillières, F-78770 Thoiry (FR)**
Inventeur: **Lequien, Jean, 52 rue Courtdimanche, F-91400 Les Ulis (FR)**

(74) Mandataire: **Gouesmel, Daniel, BULL S.A. Industrial Property Department 25 avenue de la Grande- Armée GA- 4X018, F-75016 Paris (FR)**

EP 0 148 077 B1

EP 0 148 077 B1

## Description

La présente invention concerne un procédé d'écriture d'informations sur un support d'enregistrement. Elle est plus particulièrement applicable à l'écriture d'informations sur les disques magnétiques utilisés dans les mémoires à disques.

Les mémoires à disques sont désormais fréquemment utilisées dans les systèmes de traitement de l'information.

On sait que les disques magnétiques portent les informations sous forme codée sur des pistes d'enregistrement concentriques circulaires dont la largeur n'excède pas quelques dizaines de microns et qui sont disposées sur leurs deux faces.

Les disques magnétiques sont entraînés à vitesse de rotation constante par un moteur électrique.

Les moyens qui permettent soit d'écrire (on dit également enregistrer) les informations sur des disques magnétiques, soit de les lire, soit enfin de réaliser l'une et l'autre de ces deux fonctions, sont appelés transducteurs. A une face d'un disque donné, on associe généralement un ou plusieurs transducteurs, le disque défilant devant celui-ci ou ceux-ci. Les transducteurs les plus couramment utilisés sont des transducteurs magnétiques constitués par un circuit magnétique couplé à un enroulement et comportant un entrefer. On peut définir cet entrefer comme les moyens de transduction du transducteur. Le centre de symétrie de l'entrefer est appelé centre de l'entrefer et, par extension, centre des moyens de transduction. L'entrefer est sensiblement rectangulaire et beaucoup plus long que large. On appellera "direction de l'entrefer", l'axe de symétrie longitudinal de celui-ci.

Afin d'écrire (ou de lire) les informations de toutes les pistes d'une même face d'un disque il est nécessaire de déplacer le (s) transducteur (s) associé(s) à cette face, parallèlement à celle-ci. A cet effet, le transducteur est solidaire d'un bras support lui-même porté par un système de positionnement également appelé actionneur. Dans la pratique antérieure, les actionneurs utilisés sont le plus souvent des actionneurs dits linéaires, permettant au transducteur de se déplacer suivant un rayon au-dessus de la face du disque à laquelle il est associé, la direction de l'entrefer coïncidant avec ce rayon.

On sait que, pour enregistrer une suite d'informations sur un disque magnétique, on crée sur chaque piste de celui-ci une succession de petits domaines magnétiques répartis sur toute la longueur de la piste ayant soit des inductions magnétiques positives ou négatives de même module (cas le plus fréquent) soit des inductions nulles. La direction de l'induction est soit parallèle soit perpendiculaire à la surface du disque. Le nombre de domaines magnétiques élémentaires d'induction positive est égal au nombre de domaines élémentaires d'induction négative.

La frontière géographique entre deux domaines magnétiques élémentaires adjacents d'une même piste où les inductions magnetiques sont de sens opposé définit ce que l'on appelle une transition magnétique. On voit qu'une transition magnétique est le lieu géographique où se produit un changement d'état physique entre deux domaines magnétiques élémentaires, cet état physique étant défini par le sens de l'induction magnétique. Plus généralement, dans le domaine de l'enregistrement des informations (qu'elles soient ou non magnétiques), on définira donc sous le nom de transition, le lieu géographique où se produit un changement d'état physique entre deux domaines élémentaires voisins d'une même piste.

Dans le domaine de l'enregistrement magnétique, toute information est définie par au moins une transition magnétique, sa valeur dépendant soit de la nature de la transition (positive ou négative, c'est-à-dire que l'on passe d'une induction négative à une induction positive ou l'inverse) soit de la présence ou de l'absence de cette transition, soit de la nature de l'association de cette transition avec une ou plusieurs autres transitions: on peut ainsi définir des informations constituées par l'association de deux transitions magnétiques de nature opposée, ainsi qu'il est indiqué dans le brevet français N° 2 439 435 déposé le 19 Octobre 1978 par la Compagnie Internationale pour l'Informatique CII Honeywell Bull, sous le titre "Mode d'écriture d'informations sur un support d'enregistrement magnétique". Dans ce dernier cas, la valeur de l'information est fonction de la présence ou de l'absence de la double transition.

Les progrès actuellement effectués tant dans la fabrication des disques magnétiques que dans celle des transducteurs, permettent d'accroître très sensiblement les densités radiale et longitudinale, la densité radiale étant le nombre de pistes par unité de longueur mesurée suivant un rayon et la densité longitudinale étant le nombre d'informations par unité de longueur mesurée suivant la circonférence d'une piste.

On voit donc que, pour une même quantité d'informations contenues dans une mémoire à disques, l'accroissement des densités permet de réaliser des mémoires à disques qui non seulement peuvent comporter un nombre plus limité de disques, mais également peuvent avoir des disques de dimensions plus faibles.

Dans ce cas, on préfère alors enregistrer les informations sur chacune des faces du disque de la manière suivante, ainsi qu'il a été décrit dans le brevet français N° 2 439 435.

Les informations sont alors réparties à l'intérieur de secteurs circulaires égaux et adjacents, une face du disque étant divisée habituellement en plusieurs dizaines de secteurs. Chaque secteur est divisé en deux aires inégales dont la plus grande comprend les données destinées à être traitées par le système de traitement de l'information auquel ces mémoires à disques appartiennent et l'aire la plus petite des informations de repérage des pistes, informations destinées à être utilisées par le dispositif de positionnement des transducteurs magnétiques en regard des pistes du disque.

Dans chaque secteur l'aire la plus petite est divisée en plusieurs zones appelées "zones de référence", chaque piste étant associée à deux zones adjacentes, la frontière entre ces deux zones coïncidant avec le

2

cercle situé au milieu de la piste à laquelle ces deux zones sont associées. De ce fait, lorsque le transducteur magnétique lit les informations d'une piste donnée, il lit les informations de deux zones de référence adjacentes en étant situé "à cheval" sur celles-ci c'est-à-dire parfaitement centré sur la frontière entre ces deux zones.

Chaque zone de référence comprend une pluralité de transitions magnétiques dont chacune occupe une position et un rang parfaitement déterminé à l'intérieur de la zone.

Afin que les données enregistrées sur les pistes magnétiques d'une face d'un disque (dans l'aire la plus grande de chacun des secteurs) soient lues ou écrites avec un maximum de précision possible, il est nécessaire que le transducteur soit positionné en regard de chacune des pistes de la manière la plus précise possible. Pour cela il faut que les informations de repérage des pistes soient écrites avec le maximum de précision possible, ce qui est accompli au moyen d'un appareil spécial appelé "formateur". Pour un disque donné, les informations de repérage des pistes sont écrites une fois pour toutes, par le formateur et ce pour toute la durée de vie du disque.

En même temps que l'on cherche à accroître les densités radiale et longitudinale des informations contenues sur les disques magnétiques, on cherche à réduire considérablement l'encombrement des mémoires à disques, de sorte qu'on est conduit à utiliser de plus en plus fréquemment des actionneurs rotatifs parce que ceux-ci ont besoin d'une énergie électrique moindre qu'un actionneur linéaire et que leur encombrement est moins important. Un tel actionneur rotatif comporte un équipage mobile en rotation autour d'un axe parallèle à l'axe de rotation du disque magnétique et situé à l'extérieur de celui-ci. Cet actionneur rotatif porte le bras support du transducteur d'écriture des informations contenues sur le disque, de telle façon que, lorsque le transducteur se déplace d'une piste contenue à la périphérie du disque vers la piste la plus interne du disque, il décrit un arc de cercle.

Ainsi, pour donner un ordre de grandeur, si les axes de rotation du disque magnétique et de l'actionneur sont distants de 80 mm environ, le rayon du disque étant de 65 mm, l'arc de cercle décrit par le transducteur a une longueur d'environ 20 mm et un rayon de 60 mm environ (mesuré depuis l'axe de rotation de l'actionneur).

Dans la pratique courante, les mémoires à disques de faible encombrement comportent un disque amovible ou deux disques (dont un amovible). Le disque amovible est contenu dans une cartouche comportant une fenêtre située sur la tranche de celle-ci, sensiblement rectangulaire par où doivent pénétrer les deux plate-formes comportant chacune le transducteur associé à l'une des faces du disque contenu dans la cartouche. Cette fenêtre a une dimension maximum de l'ordre de 20 x 5 mm, afin de limiter les phénomènes de turbulence d'air à l'intérieur de la cartouche ainsi que la pollution de celle-ci par les poussières. Au repos, (non-fonctionnement de la mémoire à disques), les transducteurs (et par suite leur plate-forme porteuse), sont situés à l'extérieur de la cartouche. Pour amener les transducteurs en position de lecture ou d'écriture, il est donc nécessaire d'introduire les plate-formes qui les porte de l'extérieur de la cartouche à l'intérieur en passant par ladite fenêtre alors que chaque plate-forme a une largeur de 19 mm et une hauteur de 2 mm environ et que, lorsque le transducteur lit ou écrit la piste la plus interne du disque, la longueur de la plate-forme située à l'intérieur de la cartouche est de l'ordre de 30 mm.

On montre que, dans les conditions définies ainsi par les dimensions respectives de la fenêtre, de la plate-forme, de l'actionneur rotatif, et de la position que celui-ci occupe par rapport au disque, il est impossible de disposer le transducteur magnétique d'écriture et/ou de lecture de façon telle que la direction de son entrefer soit confondue avec la tangente à la trajectoire décrite par le transducteur, ou encore de telle sorte que cette direction fasse un angle nul avec cette tangente. En fait, la direction de l'entrefer fait un angle $\varphi$ avec la tangente à la trajectoire décrite par le transducteur (on assimile de fait la trajectoire du transducteur, à la trajectoire décrite par le centre de symétrie de l'entrefer). Cet angle $\varphi$ a une valeur comprise entre quelques degrés, et une vingtaine de degrés.

Afin de mieux comprendre les conséquences de cette inclinaison de l'entrefer par rapport à la trajectoire du transducteur, il importe de faire les rappels suivants:

Pour écrire toutes les transitions des zones de référence, écrites par exemple selon le mode d'écriture décrit dans le brevet précité, on repère chacune de celles-ci par rapport à un repère angulaire de référence permanent. Le repère angulaire de référence permet de déterminer avec précision une origine des temps et donc des phases: en effet, la vitesse angulaire de rotation étant maintenue rigoureusement constante, la phase est une fonction linéaire du temps.

Dans la pratique courante des mémoires à disques et des formateurs, le repère angulaire de référence est réalisé de la manière suivante.

On établit, à la périphérie du disque sur une piste spéciale appelée piste horloge un repère particulier (qui peut être soit une transition magnétique, soit un repère détectable par des moyens optiques et réalisé par des moyens mécaniques). Ce repère particulier est détecté par un transducteur spécial appelé transducteur horloge (qui est soit un transducteur magnétique, soit un transducteur optoélectronique).

A chaque tour du disque, l'instant précis où le repère particulier est détecté par le transducteur horloge définit l'origine des temps et donc des phases.

On définit donc ainsi une succession d'instants $t_{00}$, $t_{01}$, $t_{02}$, etc tels que:

$t_{01} = t_0 + 1/N$, $t_{02} = t_{01} + 1/N$ etc... où $1/N$ est la durée effectués par le disque en une seconde. Ces instants définissent donc, à chaque tour. les origines des temps et des phases qui sont équivalentes entre elles puisque la phase est définie à un nombre entier de fois $2\pi$ près et que la vitesse est maintenue rigoureusement constante.

La position particulière occupée par le rayon du disque qui passe par ledit repère particulier à chacun des instants $t_{00}$, $t_{01}$, $t_{02}$ définis ci-dessus peut donc être appelée repère angulaire de référence.

La position d'une transition donnée d'une zone de référence d'une piste donnée d'un secteur donné est alors définie par le temps parfaitement connu qui s'écoule entre cette origine des temps telle que définie ci-dessus et le moment où on doit écrire ladite transition, ce temps dépendant de la zone où est écrite cette transition et de la vitesse de défilement du disque devant la tête d'écriture. A ce temps parfaitement connu correspond une position angulaire du rayon passant par la transition que l'on cherche à écrire par rapport au repère angulaire de référence. Cette position angulaire est appelée également phase de la transition. Lorsque l'on écrit toutes les transitions de même rang de toutes les zones de référence d'un même secteur, au moyen d'un transducteur déplacé par un actionneur linéaire, selon le mode d'écriture du brevet 2 439 435 précité, toutes ces transitions ont même phase. Ceci permet d'obtenir une précision de positionnement des transducteurs de lecture-ecriture au-dessus du disque, la meilleure possible.

On connaît par ailleurs un procédé d'écriture d'informations sur un disque magnétique utilisant les grandes lignes du mode d'écriture décrit ci-dessus. Ce procédé est décrit dans le document japonais JP-A-56 145 567 publié dans le Patents Abstracts of JAPAN, volume 6, n° 6 du 7 février 1982, page 53 P 102. Dans ce procédé d'écriture d'informations sur disque magnétique, les informations sont écrites sur une pluralité de pistes au moyen d'un transducteur déplacé en regard du support par un actionneur rotatif. Les informations dans chaque piste sont définies par des transitions entre deux états physiques, chaque transition étant définie par une phase déterminée par rapport à un rayon de référence.

Par ailleurs, dans ce procédé, on écrit chacune des transitions avec un décalage par rapport à la phase d'une transition du même rang dans une piste voisine. Ainsi ce décalage de phase de chaque transition dépend de la position radiale de la piste où la transition est écrite sur le disque, sa valeur étant fonction des paramétres géométriques de l'actionneur, du tranaducteur et du disque. Toutefois, le procédé décrit dans le document japonais précité ne permet pas de résoudre le problème suivant:

Si l'on écrit les transitions d'une zone de référence d'un disque magnétique au moyen d'un transduceur solidaire d'un actionneur rotatif, dont l'entrefer fait un angle φ avec la tangente à la trajectoire du transducteur, comme indiqué ci-dessus, de telle sorte que toutes les transitions de même rang des zones de référence d'un même secteur aient la même phase, ceci a la consequence suivante: les transitions sont décalées les unes par rapport aux autres en ayant leurs centres (milieu de la transition, celle-ci étant assimilable à un segment de droite) alignés suivant un arc de cercle analogue à celui décrit par le centre de l'entrefer. Chacune des transitions fait un angle φ avec la tangente à l'arc de cercle lieu geometrique des transitions, de telle sorte que les transitions adjacentes sont sensiblement parallèles entre elles.

Dans ce cas, la lecture des informations des zones de référence de tous les secteurs du disque, s'effectue avec beaucoup moins de précision que dans le cas où les transitions sont parfaitement alignées selon un rayon du disque. Il peut en résulter des erreurs dans la détermination de la position du transducteur de lecture au-dessus des pistes du disque et par conséquent, des erreurs dans la lecture des données du disque.

La présente invention permet de remédier à ces inconvénients, en alignant les transitions de même rang des zones de reference d'un même secteur selon une courbe obtenue par un procédé d'écriture consistant à d'abord écrire une transition de référence avec une phase de référence sur une zone de référence donnée (de préférence située à la périphérie du disque) puis à écrire chacune des transitions de la courbe avec un décalage de phase par rapport à la phase de la transition de référence, décalage qui dépend du rayon de la zone de référence où est écrite la transition et dont la valeur est fonction des paramètres géométriques définissant le système d'écriture constitué par l'actionneur, le transducteur d'écriture et le disque (rayon de la trajectoire du transducteur, angle φ, distance entre centre du disque et centre de rotation de l'actionneur, rayon de la zone où est située la transition de référence).

Ceci permet d'obtenir les mêmes avantages que ceux obtenus en écrivant les transitions avec une phase constante au moyen de transducteurs déplacés par un actionneur linéaire, à savoir une grande précision de lecture des informations de repérage des pistes et par suite une grande précision du positionnement des transducteurs par rapport aux pistes. De plus, l'exploitation des signaux provenant de la lecture de ces transitions est effectuée suivant les mêmes procédés et les mêmes circuits d'exploitation que ceux déjà décrits dans les demandes de brevet et brevets FR-A-2 472 304, FR-A-2 470 425, FR-A-2 466 081 et 2 466 078 respectivement déposées le 19.12.79; 19.11.79; 21.09.79 et le 21.09.79 par la Compagnie Internationale pour l'Informatique CII Honeywell Bull, sous les titres respectifs:

"Procédé pour commander le gain des circuits amplifiant les signaux délivrés par une tête de lecture associée à un support d'informations et dispositif pour le mettre en oeuvre".

"Procédé pour mesurer la position d'une tête de lecture écriture des informations d'un support par rapport à une position de référence de celui-ci et dispositif pour le mettre en oeuvre".

"Dispositif de mesure de vitesse mobile par rapport à un support d'informations".

"Procédé pour déplacer un système mobile par rapport à un support d'informations et dispositif pour le mettre en oeuvre",

ces procédés et ces circuits étant utilisés pour exploiter les signaux de lecture des transitions écrites dans les zones de référence suivant le brevet FR-A-2 439 435 précité.

On voit donc que, par rapport à l'art antérieur, les transitions de même rang des zones de référence d'un même secteur n ont plus même phase, mais une phase qui dépend de la position occupée par chaque transition par rapport au centre du disque et est fonction des paramètres géomtriques du système d'écriture.

4

Selon l'invention, le procédé d'écriture d'informations sur un disques où les informations sont écrites sur une pluralité de pistes au moyen d'un transducteur deplace en regard du support par un actionneur suivant une première courbe donnée, les informations étant définies par au moins une transition entre deux états physiques de deux domaines élémentaires voisins du disque, ce dernier comportant un repère de référence par rapport auquel la position de chaque transition est définie par une phase déterminée, le procédé étant tel que, dans le but d'aligner au moins une partie des transitions selon une seconde courbe prédéterminée,

1)  On écrit une transition de référence située sur une piste donnée et ayant une phase de référence;
2)  On écrit chacune des transitions de la seconde courbe avec un décalage de phase par rapport à la phase de référence qui dépend de la position de la piste où la transition est décrite sur le disque et dont la valeur est fonction des paramètres géométriques du système d'écriture constitué par l'actionneur, le transducteur et le disque, le décalage de phase de chaque transition écrite dépendant du rayon de la piste où le transducteur écrit cette transition,

est caractérisé en ce que les transitions de la seconde courbe sont des segments de droite aboutés et en ce que les valeurs du decalage de phase sont fonction de l'angle entre la direction des moyens de transduction du transducteur et la tangente à la première courbe de déplacement au point où se trouve le transducteur.

Les caractéristiques et avantages de la présente invention ressortiront plus clairement de la description qui suit, faite à titre d'exemple en se référant aux dessins annexés.

Sur ces dessins:

La figure 1:
composée des figures 1a et 1b montre un exemple préféré de répartition d'informations sur une face d'un disque magnétique, selon l'art antérieur tel que décrit dans le brevet précité,

La figure 2:    est une vue agrandie de la figure 1a,

La figure 3:    montre comment sont disposées les zones de référence par rapport aux pistes où sont enregistrées les données,

La figure 4:    montre un exemple de répartition des informations à l'intérieur d'une zone de référence d'un disque magnétique selon l'art antérieur, tel que décrit dans le brevet précité,

La figure 5:    montre comment toute transition magnétique d'une zone de référence est repérée par rapport à un repère angulaire de référence,

La figure 6:    est une vue de dessus montrant la disposition relative d'un disque magnétique et d'un actionneur rotatif portant le tansducteur magnétique qui écrit les informations sur le disque,

La figure 7:    montre comment pour des raisons d'encombrement, l'entrefer du transducteur magnétique utilisé pour écrire les informations du disque montré à la figure 6 fait un angle $\varphi$ avec la tangente à la trajectoire du transducteur magnétique au-dessus du disque,

La figure 8:    montre comment sont disposées les unes par rapport aux autres les transitions écrites de même rang des zones de référence d'un même secteur par un transducteur d'écriture déplacé par l'actionneur rotatif montré à la figure 6, avec une phase constante,

La figure 9:    montre comment, on aligne les transitions de même rang des zones de référence au moyen du procédé d'écriture selon l'invention,

La figure 10:   montre comment sont écrites les transitions de même rang de trois zones de référence adjacentes d'un même secteur selon l'invention,

La figure 11:   composée des figures 11a, 11b, 11c, montre comment on calcule le décalage de phase $\theta_j$ comme étant une somme de décalages de phase élémentaires entre transitions adjacentes

La figure 12:   montre l'algorithme de calcul de l'angle $\theta_j$,

La figure 13:   montre deux exemples de réalisation de courbes d'alignement des transitions de même rang des tones de référence d'un même secteur, avec deux pas d'écriture différents,

La figure 14:   détaille comment sont écrites des transitions de même rang des zones de référence d'un même secteur en choisissant un pas d'écriture relativement petit.

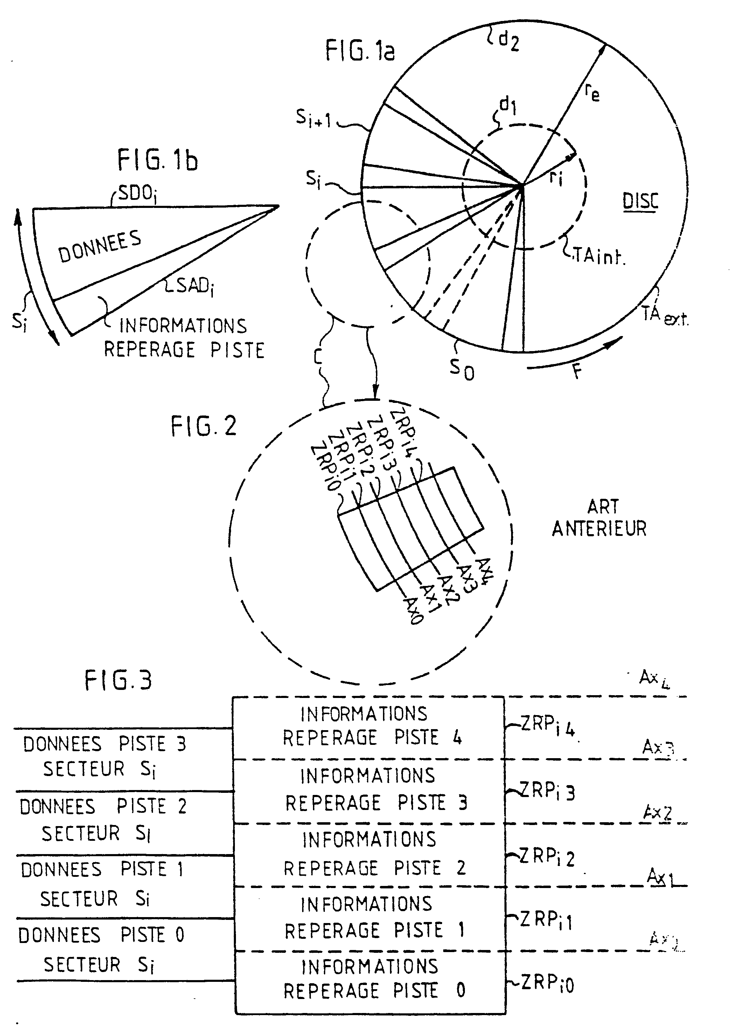

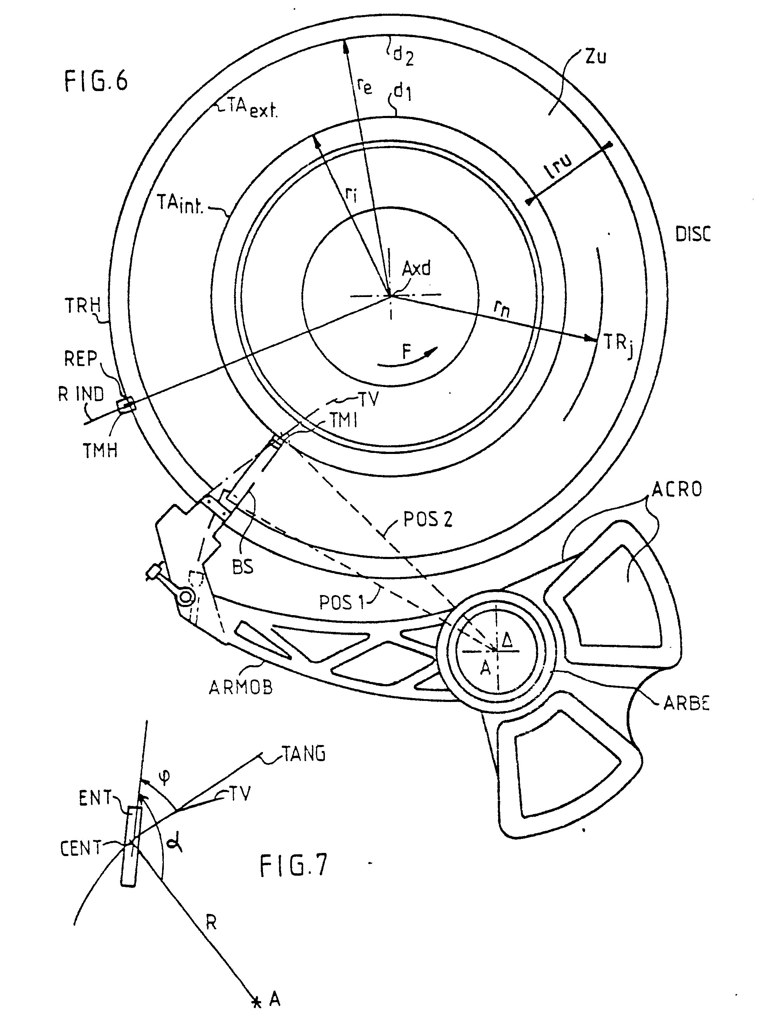

Afin de mieux comprendre comment sont écrites les informations des zones de référence d'un support d'enregistrement selon l'invention, il est necessaire de faire quelques rappels illustrés par les figures 1a, 1b, 2, 3, 4, 5 montrant d'une part comment sont réparties les informations sur la surface d'un support d'enregistrement magnétique tel qu'un disque magnétique, selon l'art antérieur et d'autre part quelques rappels illustrés par les figures 6, 7, 8 montrant comment on peut écrire les informations dans les zones de référence décrites sur les figures 1 à 5 avec un actionneur rotatif et les inconvénients qui en résultent.

Aux figures 1 à 5, on suppose qu'on écrit des informations dans les zones de référence d'un disque magnétique DISC.

A la figure 1a, ce disque DISC tourne dans le sens de la flèche F. Sa surface utile d'enregistrement est délimitée par les cercles $d_1$ et $d_2$ de rayon respectif $r_i$ et $r_e$. Ces deux cercles définissent respectivement une piste d'enregistrement intérieure $TA_{int}$ et une piste d'enregistrement extérieur $TA_{ext}$. On définit sur le disque DISC p secteurs circulaires égaux et adjacents $S_0$, $S_1$,......,$S_i$,....$S_p$. Ainsi qu'on peut mieux le voir à la figure 1b, chaque secteur $S_i$ est divisé en deux parties $SDO_i$, $SAD_i$ où sont respectivement enregistrées d'une part les données à traiter et d'autre part les informations de repérage des pistes. La surface de la partie $SAD_i$ est très

inférieure à la surface de la partie $SDO_i$ (quelques %).

Les figures 2 et 3 sont une vue agrandie de la partie $SAD_i$ du secteur $S_i$ comprise à l'intérieur du cercle C.

Chaque partie $SAD_i$ de ce secteur est divisée en $NP' = (NP+1)$ zones de référence $ZRP_{i0}$, $ZRP_{ij}$,......, $ZRP_{i(NP)}$, NP étant le nombre total de pistes d'enregistrement du disque DISC. Pour simplifier, on n'a représenté que les zones de référence $ZRP_{i0}$ à $ZRP_{i4}$ aux figures 2 et 3, ces zones étant symbolisées par des rectangles à la figure 3.

Les frontières entre les différentes zones de référence $ZRP_{ij}$ sont confondues avec les cercles $A_{xj}$ definissant le milieu des pistes d'enregistrement du disque magnétique DISC. On voit que dans chaque secteur $S_i$, à la piste de numéro d'ordre j, de cercle milieu $A_{xj}$ sont associées les zones de référence $ZRP_{ij}$ et $ZRP_{ij+1}$. Ainsi à la piste de numéro d'ordre 0, sont associées les deux zones de référence $ZRP_{i0}$ et $ZRP_{i1}$, à la piste de numéro d'ordre 1 sont associées les zones de référence $ZRP_{i1}$, $ZRP_{i2}$ et ainsi de suite.

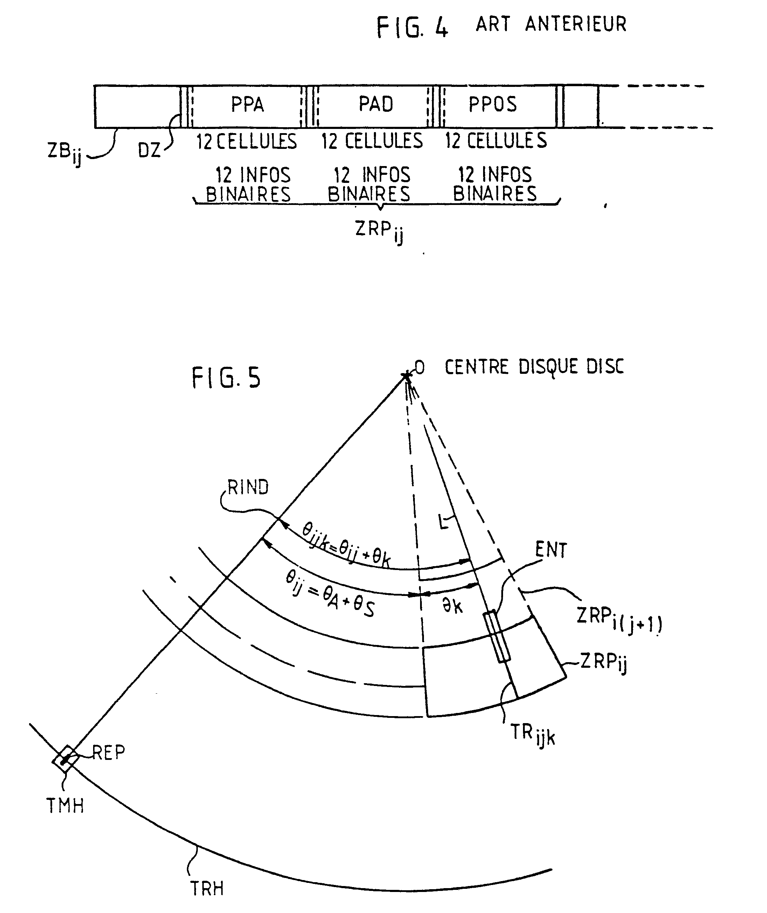

La figure 4 montre de manière plus précise la nature des informations contenues dans chaque zone de référence $ZRP_{ij}$ et comment ces informations sont réparties à l'intérieur de la zone (selon le brevet FR-A-2 439 435).

La zone de référence $ZRP_{ij}$ est précédée d'une zone dite zone de blanc $ZB_{ij}$ où l'induction magnétique est uniforme (et généralement nulle), ce qui permet de repérer de manière plus aisée le début de la zone DZ qui est indiqué par une transition magnétique spéciale. La zone de référence $ZRP_{ij}$ comprend trois parties comportant chacune 12 informations binaires contenues chacune dans une cellule d'informations. La première partie est appelée PPA et comprend 12 informations binaires, dont l'exploitation des signaux correspondants par les circuits de lecture/écriture de la mémoire à disques contenant le disque DISC, permet de déterminer le gain des amplificateurs de ces circuits de telle sorte que la precision de lecture des informations contenues dans les deux autres parties PAD et PPOS de la zone de référence $ZRP_{ij}$ soit la plus grande possible (ce qui est décrit dans FR-A-2 472 304.

La zone de référence $ZRP_{ij}$ comprend donc deux autres parties PAD et PPOS. La partie PAD comprend 12 informations binaires définissant l'adresse de la piste, l'adresse étant l'expression codée du numéro d'ordre j de la piste de numéro d'ordre j. La partie PPOS comprend 12 informations binaires qui sont des informations de position fine qui permettent de maintenir le transducteur de lecture associé au disque DISC parfaitement centré au-dessus de la piste de numéro d'ordre j, en regard de laquelle il se trouve, afin que la précision de lecture des données par ce transducteur soit la plus grande possible.

De préférence, chaque information binaire est constituée par une double transition magnétique, appelée "dibit" composée de deux transitions magnétiques de nature différente. La présence ou l'absence de cette double transition magnétique permet de donner une première valeur et une seconde valeur à l'information binaire correspondante.

On voit par conséquent, qu'au maximum, une zone de référence $ZRP_{ij}$, comprend, dans ce cas, deux fois plus de transitions magnétiques qu'il n'y a d'informations binaires. On peut donc dire qu'une zone de référence $ZRP_{ij}$ comprend au maximum n transitions magnétiques $TR_{ijl}$ à $TR_{ijn}$, chaque transition magnétique étant désignée sous le terme général $TR_{ijk}$, k variant de l à n (voir figure 5).

Ainsi qu'on peut le voir à la figure 5, un transducteur magnétique TMI de lecture des transitions des zones de référence d'un disque magnétique DISC, lit les informations sur les zones de référence en étant à cheval sur celles-ci, c'est-à-dire en étant centré sur la frontière géographique entre deux zones de référence voisines (les zones de référence $ZRP_{ij}$ et $ZRP_{i(j+1)}$ à la figure 5). Il est évident que dans ce cas, le transducteur TMI lit les données contenues sur la piste de numéro d'ordre j. Le transducteur est symbolisé à la figure 5 par son entrefer ENT, dont le centre est CENT.

Ainsi qu'il a été indiqué plus haut, on définit pour l'ensembles des zones de référence du disque DISC un repère angulaire de référence, par rapport auquel sont repérées toutes les transitions magnétiques de toutes les zones.

Ce repère angulaire de référence est défini par un rayon RIND passant par un repère particulier REP situé sur une piste horloge TRH située à la périphérie du disque, ce repère étant lu par le transducteur horloge TMH.

Chaque zone de référence $ZRP_{ij}$ est repérée par rapport au repère angulaire de référence RIND par sa phase $\theta_{ij} = \theta_A + \theta_S \cdot \theta_A$ est une constante arbitraire définie pour chaque mémoire à disques, ou pour chaque formateur et $\theta_s$ est la phase de la zone de référence $ZRP_{ij}$. Ainsi si l'on convient de placer le repère angulaire de référence dans le secteur $S_0$, au début de la zone $ZRP_{0j}$, cette phase est égale à $(ix2\pi/p+1)$ p+1 étant le nombre de secteurs et $(2\pi/p+1)$ l'écart angulaire entre chacun des secteurs. Ainsi, s'il y a 33 secteurs, la phase $\theta_s$, du secteur $S_i$ (et donc de $ZRP_{ij}$) est égale à $2\pi/33$. Pour obtenir la phase $\theta_{ijk}$ d'une transition $TR_{ijk}$ de chaque transition de la zone $ZRP_{ij}$, il convient d'ajouter à la phase $\theta_{ij}$ de la zone, une phase $\theta_k$ propre à chaque transition qui dépend de la position qu'occupe celle-ci à l'intérieur de la zone.

On a donc $\theta_{ijk} = \theta_{ij} + \theta_k$.

Chaque transition est par conséquent parfaitement définie par sa phase $\theta_{ijk}$. A cette phase $\theta_{ijk}$ correspond une distance ijk mesurée suivant la circonférence de rayon $r_j$ de la zone de référence $ZRP_{ij}$, à laquelle correspond un temps de parcours $t_{ijk}$ effectué entre le moment où le repère angulaire RIND passe en regard du transducteur TMH, et le moment où le transducteur TMI écrit ou lit la transition $TRI_{ijk}$ sur le disque.

On voit donc que, à partir du moment où la phase $\theta_{ijk}$ d'une transition $TR_{ijk}$ est connue, on peut aisément écrire ou lire cette transition sur le disque au moyen des circuits d'écriture et de lecture de la mémoire à disques contenant le disque DISC.

Selon une particularité du mode d'écriture selon l'art antérieur tel que décrit dans les figures 1 à 5, les transitions de même rang de l'ensemble des zones de référence d'un même secteur $S_i$, quand elles existens, ont toutes la même phase $\theta_{ijk}$. On montre que ceci permet d'obtenir une plus grande précision dans la détermination de la position du transducteur TMI au-dessus des pistes du disque. A ce sujet, on se réfère plus particulièrement aux demand es de brevets FR-A-2 472 304, FR-A-2 470 425, FR-A-2 466 081 brevet (FR-A-2 466 078) précités.

On considère désormais la figure 6 qui est une vue de dessus d'un actionneur rotatif ACRO et du disque magnétique DISC, situés dans un formateur de disque magnétique. Le disque DISC est analogue à celui montré aux figures 1 à 5. Il comprend donc une zone utile $Z_u$ de largeur $1_{ru} = r_e - r_i$. Ce disque tourne dans le sens de la flèche F autour de son axe de rotation $Ax_d$. Dans la pratique courante actuelle, la zone utile $Z_u$ comprend quelques centaines de pistes (par exemple entre 600 et 1000). La largeur $1_{ru}$ de la zone utile $Z_u$ est de l'ordre de 20 millimètres. Pour les raisons qui ont été citées plus haut, on tend de plus en plus à utiliser des actionneurs rotatifs tel que l'actionneur ACRO pour déplacer les transducteurs de lecture et écriture des informations sur les disques magnétiques.

L'actionneur rotatif ACRO est du type de celui décrit dans FR-A-2 523 346 (déposée le 15 Mars 1982 par la Compagnie Internationale pour l'Informatique CII Honeywell Bull sous le titre "Dispositif de chargement de corps principal de plate-forme comportant au moins un transducteur de lecture/écriture d'un support d'informations").

L'actionneur rotatif ACRO comprend essentiellement un arbre d'entraînement en rotation ARBE ayant pour axe de rotation $\Delta$, et une armature métallique réalisée en un métal léger, ARMOB. Cette armature est solidaire mécaniquement du bras support BS du transducteur d'écriture TMI. On voit que l'axe de rotation $\Delta$, est situé nettement à l'extérieur du disque DISC. Pour écrire les informations de repérage des pistes de l'ensemble des zones de référence de positionnement de la zone utile $Z_u$, on voit qu'il est nécessaire de déplacer l'actionneur rotatif ACRO d'une position $POS_1$ où le transducteur TMI est situé au-dessus de la piste $TA_{ext}$ à une position $POS_2$ où le transducteur TMI est disposé en regard de la piste interne $TA_{int}$. Pour passer de la position $POS_1$ à la position $POS_2$, l'actionneur rotatif tourne autour de l'axe de rotation $\Delta$, de telle sorte que le transducteur TMI décrit un arc de cercle TV, ayant pour centre A. Ce point A est la trace de l'axe de rotation $\Delta$ sur le plan de la figure qui est parallèle au disque DISC et contient l'entrefer ENT du transducteur.

Ainsi qu'il a été indiqué plus haut, pour des raisons d'encombrement, la direction de l'entrefer ENT du transducteur TMI fait un angle $\varphi$ (voir fig. 7) avec la tangente TANG à la trajectoire du transducteur (on rappelle qu'on appelle trajectoire du transducteur, la trajectoire du centre CENT de l'entrefer ENT du transducteur TMI). Si l'on appelle C le point de la trajectoire TV au-dessus de laquelle se trouve le centre CENT, on appelle $\alpha$ l'angle entre la direction de l'entrefer ENT et le segment de droite AC. On a donc:

$\varphi = \alpha - \pi/2$. $\varphi$ est un paramètre géométrique du système d'écriture constitué par l'actionneur rotatif ACRO, le transducteur TMI, et le disque DISC.

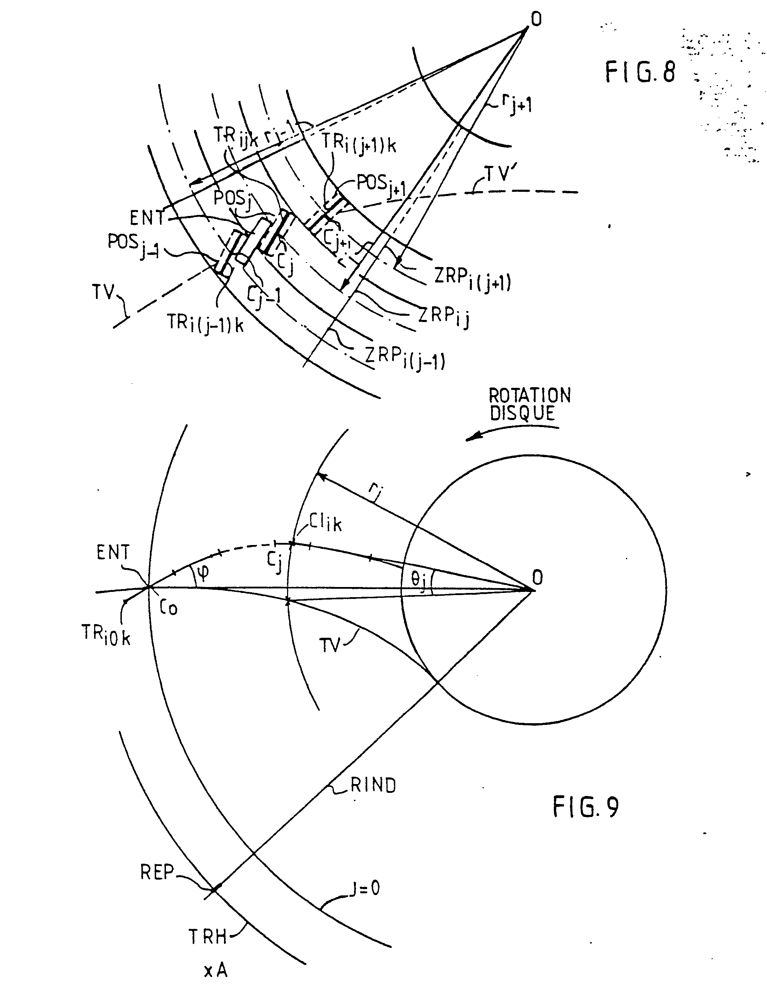

On considère la figure 8 qui montre les conséquences qu'entraîne la disposition relative du transducteur TMI par rapport à l'actionneur ACRO et au disque DISC, sur l'écriture des transitions de même rang des zones de référence d'un même secteur, lorsque l'on utilise le mode d'écriture selon l'art antérieur, c'est-à-dire lorsque toutes les transitions de même rang des zones de référence d'un même secteur sont écrites avec la même phase $\theta_{ijk}$.

On considère donc une transition du kième rang des zones de référence du secteur $S_i$. A la figure 8, on n'a représenté que trois zones de réference voisines a savoir $ZRP_{i(j-1)}$, $ZRP_{ij}$ et $ZRP_{i(j+1)}$, et seulement trois transitions à savoir $TR_{i(j-1)k}$, $TR_{i(j-1)k}$. Les transitions ont leurs centres ($C_{j-1}$, $C_j$, $C_{j+1}$) qui sont alignés selon un arc de cercle TV (voir figure 8) alors qu'elles sont sensiblement parallèles les unes aux autres en faisant respectivement un angle $\gamma$ avec la tangente à cet arc de cercle aux points $C_{j-1}$, $C_j$, $C_{j+1}$. Cet arc de cercle est identique a l'arc de cercle TV décrit par le centre CENT de l'entrefer ENT du transducteur TMI et coïncide avec ce dernier une fois par tour de disque. La fig. 8 est, pour ainsi dire, une photographie du disque et de la trajectoire TV du transducteur au moment où l'arc de cercle TV portant les transitions $TR_{i(j-1)k}$, $TR_{ijk}$, $TR_{i(j+1)k}$, coïncide avec l'arc de cercle TV.

Cela s'explique de la manière suivante: Lorsqu'on écrit la transition $TR_{i(j-1)k}$, au moyen de l'entrefer ENT, celui-ci (représenté en pointillé) occupe la position $POS_{j-1}$, en étant centré sur la zone de référence $ZRP_{i(j-1)}$, à la distance $r_{j-1}$ du centre du disque et fait un angle $\varphi$ avec la tangente à l'arc de cercle TV. Le centre $C_{j-1}$ de la transition $TR_{i(j-1)k}$ est situé sur cet arc de cercle. Il est admis, en effet, qu'une transition écrite par l'entrefer ENT en un endroit donné, a sensiblement même dimension et même direction que l'entrefer. La phase de la transition est $\theta_{ijk}$. La transition fait un angle $\varphi$ avec la tangente à l'arc de cercle TV au point $C_{j-1}$.

Une fois la transition $TR_{i(j-1)k}$ écrite, on déplace le transducteur qui vient occuper la position $POS_j$ et est centré sur la zone de référence $ZRP_{ij}$, à la distance $r_j$ du centre du disque. (Son entrefer ENT étant alors représenté en pointillé).

Lorsque la transition $TR_{i(j-1)k}$ a tourné d'un tour, la phase est aussi égale à $\theta_{ijk}$ (à 2 π près), et le centre $C_{j-1}$ de la transition vient coïncider avec la courbe TV, on écrit alors à cet instant la transition $TR_{ijk}$, dont le centre $C_j$ est disposé sur l'arc de cercle TV et fait un angle $\varphi$ avec la tangente à la trajectoire. En effectuant le même raisonnement pour toutes les transitions, on voit que TV' est identique à TV et coïncide avec celui-ci une fois par tour.

Pour lire les transitions ainsi écrites sur l'arc de cercle TV' par le transducteur TMI, l'entrefer ENT est disposé

7

en regard des zones de référence en étant à cheval sur deux zones voisines, par exemple $ZRP_{ij}$ et $ZRP_{i(j-1)}$ (l'entrefer ENT est représenté en traits pleins à la fig. 8). Il ne recouvre alors qu'une partie des transitions $TR_{i(j-1)k}$ et $TR_{ijk}$ ce qui nuit à la précision de lecture et par conséquent à la précision du positionnement.

La présente invention permet de remédier aux inconvénients mentionnés ci-dessus en alignant les transitions $TR_{ijk}$ de même rang k des zones de référence d'un secteur $S_i$, selon une courbe $Cl_{ik}$ par l'utilisation du procédé d'écriture suivant, illustré par les figs. 9 à 12:

1.  on définit pour celle-ci et on écrit, une transition de référence qui, de préférence est la première transition $TR_{iok}$, appartenant à la zone de référence la plus externe sitée à la périphérie de la zone utile $Z_u$ à la distance $r_e$ du centre du disque. Si $C_o$ est le centre de transition, on a donc $OC_o = r_e$ (voir fig. 9). Cette transition a une phase dite "phase de référence" $\theta_{ijk}$ qui est définie de la même manière quà la fig. 5, le repère angulaire de référence RIND étant défini de la même manière qu'aux figs. 5 et 6.

    A la fig. 9, la transition $TR_{iok}$ est représentée, ainsi que le rayon RIND au moment où la transition a son centre $C_o$ coïncidant avec la trajectoire TV de l'entrefer ENT du transducteur d'écriture TMI. Ce moment est donc soit le moment précis où la transition est écrite par le transducteur, soit l'un des moments où la transition une fois écrite passe en regard de la trajectoire de vol TV. On peut donc dire que la fig. 9 est une photographie de la situation respective du disque DISC, de la transition $TR_{iok}$ (et donc de la courbe $Cl_{ik}$) au moment où le centre $C_o$ de la transition $TR_{iok}$ coïncide avec la trajectoire de vol TV.

2.  On écrit les autres transitions $TR_{ijk}$ de la courbe $Cl_{ik}$, les unes à la suite des autres, de telle manière que leur phase $\theta'_j$ est telle que:

    $\theta'_j = \theta_{ijk} + \theta_j$ où $\theta_{ijk}$ est la phase de la transition de référence définie ci-dessus et $\theta_j$ est un décalage de phase de la transition $TR_{ijk}$ par rapport à cette phase de référence.

Pour la transition $TR_{iok}$, il est clair que $\theta_0 = 0$.

Selon l'invention, d'une zone de référence à l'autre, et par conséquent d'une transition de même rang d'une zone de référence à la transition de même rang des zones de référence adjacentes, le décalage de phase $\theta_j$ varie.

Cette valeur de $\theta_j$ dépend de la position occupée par la transition $TR_{ijk}$ sur le disque, c'est-à-dire du rayon $r_j$ de la zone de référence $ZRP_{ij}$ contenant la transition et est fonction des paramètres géométriques du système d'écriture constitué par l'actionneur, le transducteur et le disque (distance D entre le centre 0 du disque et l'axe de rotation A de l'actionneur, rayon R de la trajectoire TV, rayon extérieur $r_e$, angle $\varphi$).

Plus précisément, entre deux transitions $TR_{i(j-1)k}$ et $TR_{ijk}$ voisines, existe un décalage de phase élémentaire, appelé $\Delta\theta_j$, dépendant de $r_j$ et des paramètres géométriques définis ci-dessus.

Ainsi, si la phase de la transition $TR_{i0k}$ est $\theta_{ijk}$, la phase de $TR_{i1k}$ est:
$\theta'_1 = \theta_{ijk} + \Delta\theta_1$.

La phase de $TR_{i2k}$ est:
$\theta'_2 = \theta'_1 + \Delta\theta_2$.

Pour $TR_{ijk}$, on a:
$\theta'_j = \theta'_{j-1} + \Delta\theta_j$.

On a donc $\theta_j = \sum_{1}^{j} \Delta\theta_j$.

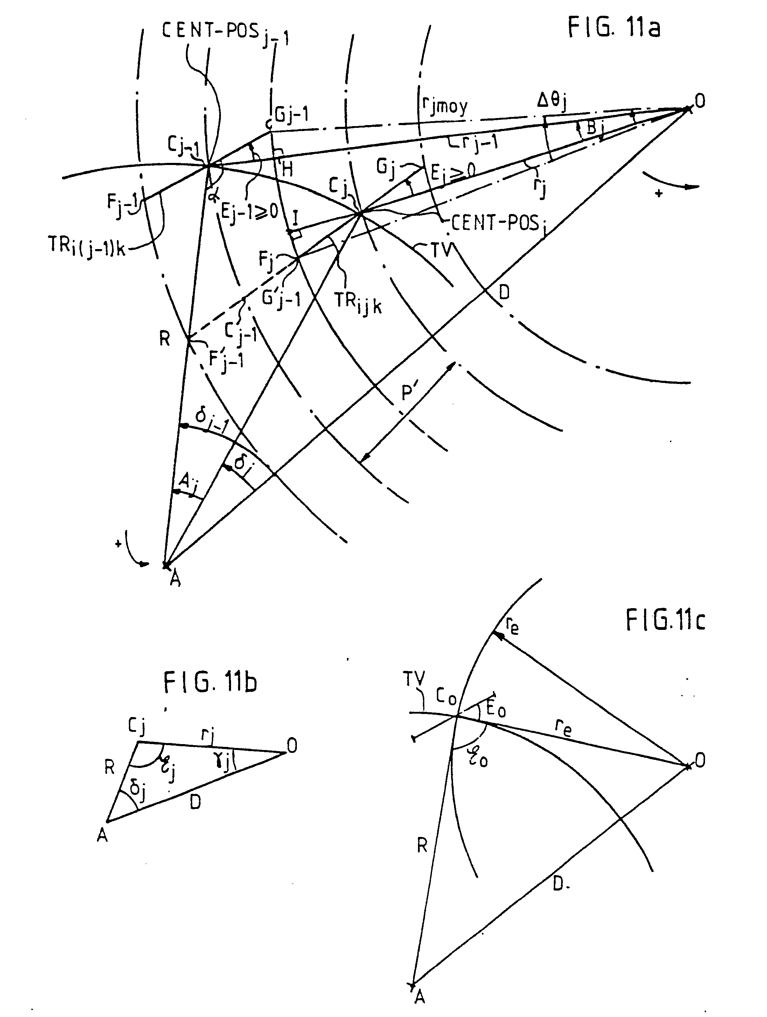

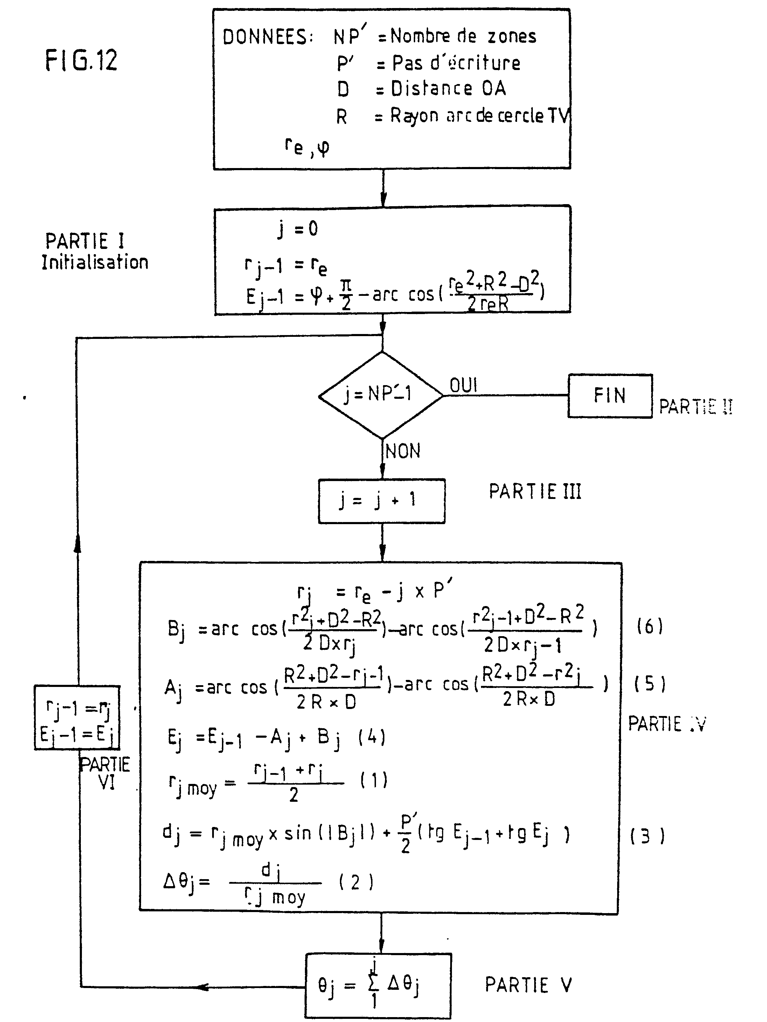

Le calcul détaillé de $\Delta\theta_j$, sera indiqué plus bas, en référence aux figures 11 et 12.

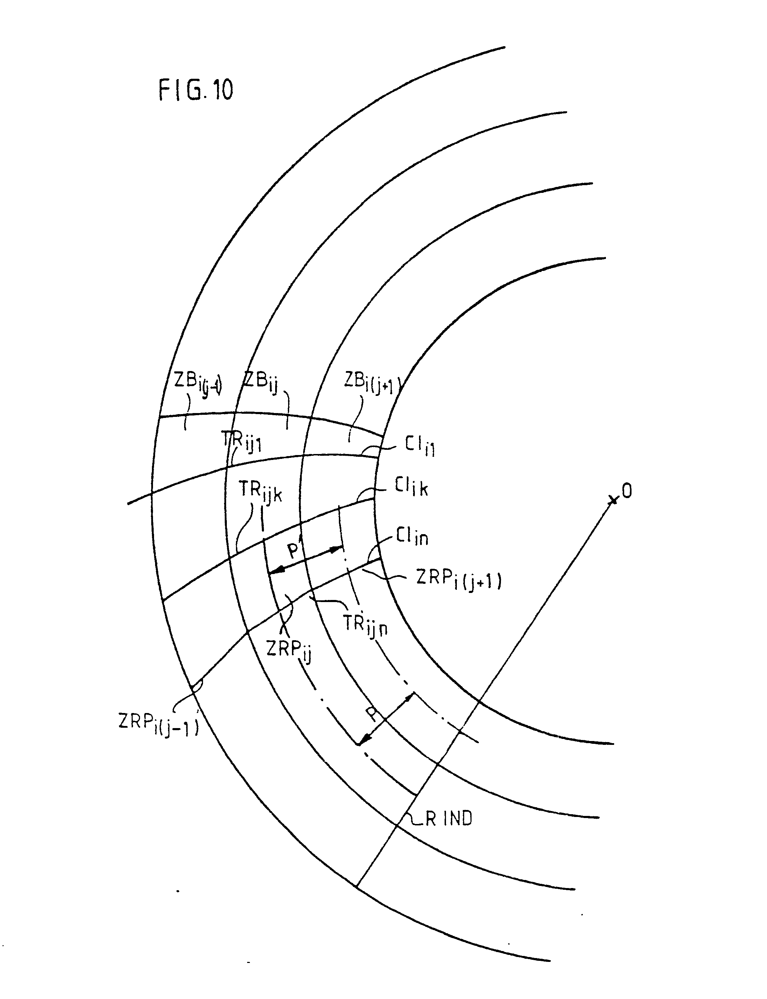

On considère la figure 10 qui montre comment sont alignées plusieurs transitions de même rang de zones de référence adjacentes d'un même secteur $S_i$, à savoir les zones de référence $ZRP_{i(j-1)}$, $ZRP_{ij}$, $ZRP_{i(j+1)}$. On a fait figurer sur cette même figure 10 les trois courbes d'alignement des trois transitions de rang l, k, n, la transition de rang l étant la première transition des zones de référence et la transition de rang n étant la dernière transition. Les courbes d'alignement des transitions correspondant à ces trois transitions de rang l, k, n sont respectivement $Cl_l$ $Cl_{ik}$ et $Cl_{in}$. Il est parfaitement clair que chacune des courbes $Cl_{ik}$ est constituée par un nombre fini de segments aboutés, ces segments étant définis par les transitions $TR_{ijk}$ qui sont sensiblement des segments de droite.

On considère la figure 11 qui permet de comprendre comment on calcule l'angle $\theta_j$. On rappelle que $\theta_o = 0$ pour la transition $TR_{iok}$.

On désigne par P' le pas d'écriture des transitions $TR_{ijk}$, ce pas étant défini comme la distance entre les cercles passant par les centres des transitions, à savoir dans l'exemple de la figure 11, les cercles de rayon $r_{j-1}$ et $r_j$ passant par les centres $C_{j-1}$ et $C_j$ des transitions $TR_{i(j-1)k}$ et $TR_{ijk}$.

Il est clair qu'aux figures 10 et 11, on a supposé que P' est choisi égal au pas P des zones de référence $ZRP_{ij}$ (distance entre les cercles milieu des zones) lui-même égal au pas des pistes. De plus, la longueur des transitions est supposée sensiblement égale à P' (en réalité, elle est légèrement inférieure pour éviter des interférences d'écriture entre transitions).

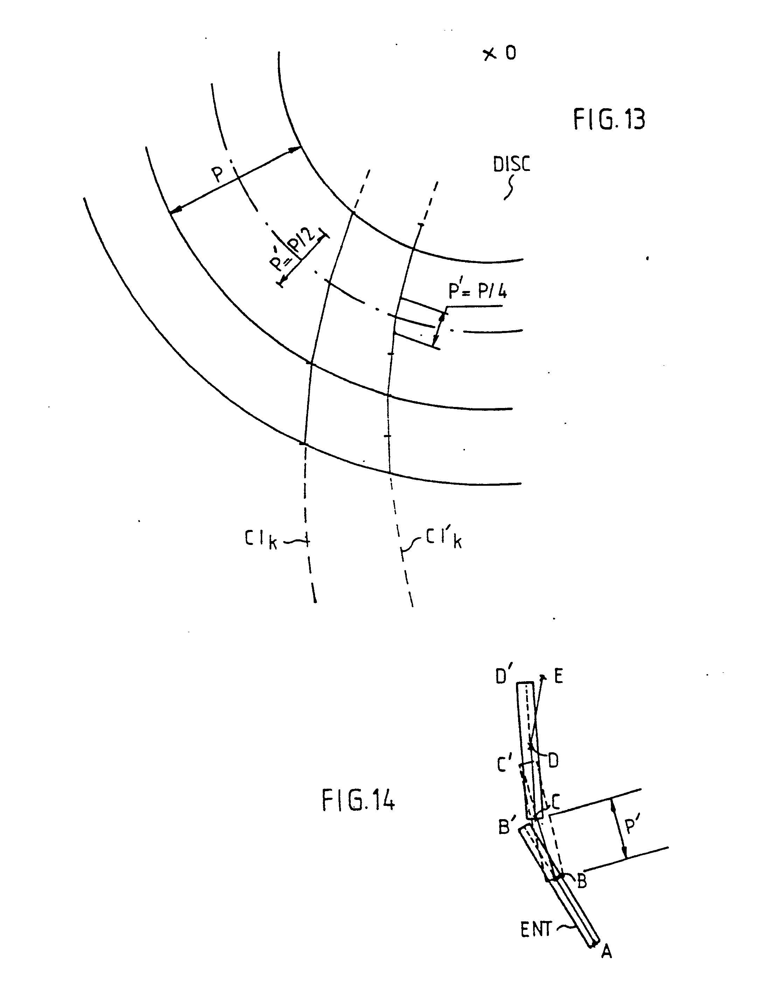

Ces choix ont été effectués dans le but de clarifier l'exposé de l'invention, et notamment le mode de calcul de l'angle $\theta_j$ qui va suivre. Ainsi qu'on le verra plus loin, on peut choisir des pas P' d'écriture des transitions inférieurs au pas P des zones de référence, égaux par exemple à des fractions entières de ce pas, soit P/m où le nombre m est un entier. Dans ce cas, chaque zone comptera m transitions aboutées les unes aux autres. On obtient ainsi une définition plus précise des courbes $CI_{ik}$ (se reporter plus loin, description des figures 13 et 14).

On considère la figure 11a.

A l'instant où l'on écrit la transition $TR_{i(j-1)k}$, ayant une phase $\theta'_{j-1} = \theta_{ijk} + \theta_{j-1}$, le centre CENT de l'entrefer ENT du transducteur d'écriture occupe la position $POS_{j-1}$, indiquée à la figure 11a. A cet instant Le centre $C_{j-1}$, de la transition écrite coïncide avec le centre de l'entrefer et est situé alors sur la trajectoire TV. La transition occupe alors la position indiquée par les trois points alignés $F_{j-1}$, $C_{j-1}$, $G_{j-1}$. On suppose alors que pendant le tour de rotation du disque qui suit l'instant ou l'on écrit la transition $TR_{i(j-1)k}$, on déplace l'entrefer de telle sorte que son centre vienne occuper la position $POS_j$, à la distance $r_j$ du centre O du disque.

Lorsque ce tour de rotation a été accompli, la transition $TR_{i(j-1)k}$ revient occuper la position $F_{j-1}$ - $C_j$ - $G_{j-1}$.

Pour écrire la transition $TR_{ijk}$ de manière à ce que les deux transitions $TR_{i(j-1)k}$ et $TR_{ijk}$ soient alignées, il faut attendre l'instant où la transition $TR_{i(j-1)k}$ vient occuper la position indiquée par les trois points alignés $F'_{j-1}$-$C'_{j-1}$-$G'_{j-1}$, c'est-à-dire qu'il faut écrire la transition $TR_{ijk}$ avec un décalage de phase $\Delta\theta_j$, par rapport à la phase $\theta'_{j-1}$, tel que la phase de $TR_{ijk}$ soit:

$\theta'_j = \theta'_{j-1} + \Delta\theta_j$ où $\Delta\theta_j$ est l'angle $OG'_{j-1}$, $OG_{j-1}) = (OF_j, OG_{j-1})$.

On a de même $\theta_j = \theta_{j-1} + \Delta\theta_j$.

Dans l'exemple de réalisation décrit ici, $\Delta\theta_j$, est un retard de phase.
On assimile l'arc de cercle $F_jG_{j-1}$ à un segment de droite.
On rappelle que $\alpha$ est l'angle:

$AC_{j-1}G_{j-1} = AC_jG_j = \varphi + \pi/2$,
que le rayon de la trajectoire de vol est $R = AC_j = AC_{j-1}$,
que l'on a $OA = D$
On pose:
l'angle $A_j = (AC_j, AC_{j-1})$
l'angle $B_j = (OC_j, OC_{j-1})$
l'angle $E_j = (C_jO, TR_{ojk})$
l'angle $E_{j-1} = (C_{j-1}, TR_{i(j-1)k})$
la distance $d_j = F_jG_{j-1}$

la distance $r_{jmoy} = \frac{r_j + r_{j-1}}{2} = OF_j = OG_{j-1}$       (1)

l'angle $\Delta\theta_j$ étant très petit, on peut écrire:

$\Delta\theta_j \cong t_g(\Delta\theta_j) \cong \frac{d_j}{r_{jmoy}}$       (2)

on a $d_j = IH + IF_j + HG_{j-1}$

Les triangles OIH, $C_{j-1}$ et $F_jC_{j-1}$ étant assimilés à des triangles rectangles, on peut écrire:

$IH = r_{jmoy} \sin|B_j|$

$IF = (P'/2)tg\, E_j$

$HG = (P'/2)tg\, E_{j-1}$

On a donc:

$d_j = r_{jmoy} \sin|B_j| + (P'/2)tg\, E_j + (P'/2)tg\, E_{j-1}$       (3)

Si l'on considère maintenant les trinagles $AOC_{j-1}$ et $AOC_k$ (figure 11b) on a:
$(AO, AC_j) = \delta_j$
$(AO, AC_{j-1}) = \delta_{j-1}$
$(OC_j, OA) = \gamma_j$
$(OC_{j-1}, OA) = \gamma_{j-1}$
$(C_jA, C_jO) = \xi_j$
$(C_{j-1}, C_{j-1}O) = \xi_{j-1}$

On pose: $\qquad A_j = \delta_{j-1} - \delta_j \geqslant O$ quel que soit j

$\qquad\qquad\qquad B_j = \gamma_j - \gamma_{j-1} \leqslant O \quad$ quel que soit j

On a (triangles $AC_jO$, $AC_{j-1}O$):

$$\pi = \delta_{j-1} + \xi_{j-1} + \gamma_{j-1}$$

$$\pi = \delta_j + \xi_j + \gamma_j$$

ou encore:

$$\pi = \delta_{j-1} + \alpha - E_{j-1} + \gamma_{j-1}$$

$$\pi = \delta + \alpha - E_j + \gamma_j,$$

d'où l'on tire:

$$E_j = E_{j-1} + (\delta_j - \delta_{j-1}) + (\gamma_j - \gamma_{j-1})$$

d'où:

$$E_j = E_{j-1} - A_j + B_j \qquad (4)$$

Les relations trigonométriques dans les triangles $AC_jO$, $AC_{j-1}O$ permettent d'écrire (figure 11b):
$$A_j = \delta_{j-1} - \delta_j = \text{Arc cos } \frac{(R^2 + D^2 - r_{j-1}^2)}{2RD} - \text{Arc cos } \frac{(R^2 + D^2 - r_j^2)}{2RD} \qquad (5)$$

$$B_j = \gamma_j - \gamma_{j-1} = \text{Arc cos } \frac{(r_j^2 + D^2 - R^2)}{2Dr_j} - \text{Arc cos } \frac{(r_{j-1}^2 + D^2 - R^2)}{2 r_{j-1}D} \qquad (6)$$

On rappelle de plus que:

$$\theta_j = \sum_{j=1}^{j} \Delta\theta_j$$

Pour la transition $TR_{i0k}$, on peut calculer $E_0 = \varphi + \pi/2 - \xi_0$ où $\xi_0 = (C_0A, C_0O) = \text{arc cos } \frac{(r_e^2 + R^2 - D^2)}{2r_eR}$ (voir figure 11c). Si l'on pose $E_0 = E_{j-1}$ pour la transition $TR_{iok}$, on voit que de proche en proche, on peut calculer toutes les valeurs de $e_{j-1}$ et $E_j$ (relations (4), (5), (6) et par suite, connaissant $r_{jmoy}$, toutes les valeurs de $d_j$ et donc $\Delta\theta_j$ et par suite $\theta_j$.

Tous les éléments du calcul de $\theta_j$ indiqués ci-dessus se retrouvent dans l'algorithme de calcul des angles $\Delta\theta_j$ montré à la figure 12.

Les données utilisées pour effectuer le calcul sont le nombre de zones N P', le pas de l'écriture P' (qui dans l'exemple donné est égal au pas des zones de référence) la distance D, le rayon R de la trajectoire TV, le rayon extérieur $r_e$ et l'angle $\varphi$.

L'algorithme de calcul comprend six grandes parties successives:

1. <u>Partie I:</u> $\qquad$ Initialisation du calcul correspondant à l'écriture de la transition $TR_{iok}$ où $j = 0$ (figure 11c) où on pose comme egal a $E_{j-1}$ l'angle $E_0 = (C_0A, C_00)$, ce qui permettra dans la suite du calcul de déterminer, de proche en proche, toutes les valeurs de $E_j$ à partir de $E_0$

2. <u>Partie II:</u> $\qquad$ On vérifie ensuite si j n'est plus égal à NP'-1 (ce qui correspond à la zone de référence la plus interne) $S_{ij} = NP'-1$ le calcul est terminé, sinon on passe à la partie III.

3. <u>Partie III:</u> $\qquad$ On fait $j = j+1$, c'est-à-dire qu'on donne à j une nouvelle valeur égale à la précédente incrémentée de 1.

4. <u>Partie IV:</u> $\qquad$ On donne à $r_j$ une nouvelle valeur telle que $r_j = r_e - j \times P'$, et on calcule les valeurs de $B_j$, $A_j$, $E_J$, $r_{jmoy}$, $d_j$, $\Delta\theta_j$, selon les formules (6), (5), (4), (1), (3), (2) établies plus haut, puis on passe à la partie V.

5. <u>Partie V:</u> $\qquad$ On calcule $\theta_j = \sum_1^j \Delta\theta j$, puis on passe à la partie VI.

6. <u>Partie VI:</u> $\qquad$ On donne a $r_{j-1}$ et $E_{j-1}$, les précédentes valeurs (utilisées dans la partie IV) de $r_j$ et $E_j$, puis on retourne à la partie II et ce jusqu'à ce que le calcul soit terminé quand $j = NP'-1$.

En référence aux figures 11 et 12 et à la description correspondante ci-dessus (formules (1) à (6) et partie I de l'algorithme) on voit que l'angle $\theta_j$ dépend bien de la position (rayon $r_j$) la piste où la transition est écrite et que sa valeur est fonction des paramètres géométriques (R, $r_e$, φ, D) du système d'écriture défini plus haut.

En fonction de ce qui précède, on voit que en revenant à la figure 9, on peut dire que, pour chaque transition. $TR_{ijk}$, la courbe $CI_{ik}$ est déduite de la trajectoire (TV) par une transformation géométrique qui est une rotation de centre O de rayon $r_j$, d'angle $\theta_{ij}$ (à un multiple de 2 η près) transformation qui est donc fonction, pour chaque transition, de la position de la piste où elle est écrite sur le disque et des paramètres géométriques du système d'écriture définis plus haut.

On considère désormais la figure 13 qui montre comment on peut écrire deux courbes d'alignement des transitions $CI_{ik}$ et $CI_{ik}$ en utilisant des pas d'écriture P' différents.

La courbe $CI_{ik}$ est obtenue en utilisant un pas P' sensiblement égal à P/2.

La courbe $CI_{ik}$ est obtenue en utilisant un pas d'écriture de transitions P' = 1/4.

Pour écrire l'ensemble des segments des courbes $CI_{ik}$ et $CI_{ik}$ on procède de la manière indiquée à la figure 14, où les dimensions et le décalage entre les transitions successives sont volontairement exagérés pour mieux comprendre la figure.

Lorsque l'entrefer ENT est centré au-dessus du point B, on écrit une transition AB', la première partie de la transition AB étant indiquée en traits pleins et la seconde partie en traits interrompus pour les raisons qui seront indiquées ci-dessous.

On déplace ensuite le transducteur TMI d'un pas P, de sorte que le centre de l'entrefer vienne occuper la position indiquée par le point C. On écrit de la sorte la transition BC' composée des segments BC représentés en traits pleins et CC' représentés en traits interrompus. Dans cette position, le transducteur TMI en écrivant la transition BC' efface le segment de transition BB'..

Ensuite, on déplace à nouveau le transducteur d'un pas égal à P' de sorte que son entrefer est centré dans une position indiquée par le point D. Il écrit alors la transition CD', efface le segment de transition BC'. On continue ainsi à déplacer l'entrefer ENT du transducteur TMI par une série de déplacements successifs de pas P' de sorte qu'on écrit une succession de segments aboutés AD, DC, CD, DE, et ainsi de suite, la longueur des segments AB, BC, CD, DE, etc... étant sensiblement égale à P'.

On voit que si P' = P/2, le nombre de transitions $TR_{ijk}$ écrites sur le disque est égal à 2NP' (avec 2 transitions par zone de référence) j variant de 0 à 2NP'-1.

De même, si P' = P/4, le nombre de transitions $TR_{ijk}$ écrites sur le disque est égal à 4NP' (avec 4 transitions par zone de référence) j variant de 0 à 4NP'-1.

Plus généralement, si P' = P/m, le nombre de transitions $TR_{ijk}$ écrites est égal à mxNP' (avec m transitions par zone), j variant de 0 à mxNP'-1.

Dans ces conditions, le mode de calcul de $\theta_j$ indiqué plus haut, en référence aux figures 11 et 12 demeure valable, NP' n'étant plus le nombre de zones mais le nombre total de transitions qu'on cherche à écrire et à aligner.

Plus généralement, l'invention est applicable non seulement à l'alignement des transitions de même rang de l'ensemble des zones de référence d'un même secteur mais aussi à l'alignement de transitions de même rang appartenant à un ensemble de pistes adjacentes, une piste étant définie comme le lieu géométrique des transitions situées à la même distance $r_j$ du centre 0 du disque. Il est clair que, dans ce cas, le raisonnement qui a été fait ci-dessus en référence aux figures 9 à 14 reste tout à fait valable, à condition de remplacer le mot zone de référence par le mot piste.

Il est évident que les courbes $CI_k$ obtenues qui sont formées d'une suite d'éléments discrets, sont définies d'une manière plus précise à mesure que P' décroit.

On voit que pour écrire chacune des transitions $TR_{ijk}$ de l'ensemble des zones de référence de tous les secteurs d'un disque DISC, il suffit de connaître pour chacune d'entre elles la valeur de $\theta_j$ (étant donné que la valeur $\theta_{ijk}$ est déjà connue). On connaît ainsi la phase de chacune des transitions, et par suite, le temps qui s'écoule entre le passage du repère angulaire de référence devant le transducteur TMH définissant l'origine des temps et des phases et le moment où on écrit la transition $TR_{ijk}$ de telle sorte que sa phase soit égale à $\theta_{ijk}$ + $\theta_j$. Il suffit donc de mémoriser dans une table mémoire toutes les phases des transitions $TR_{ijk}$ de toutes les zones de référence de tous les secteurs $S_i$ du disque DISC, et de commander les circuits électroniques d'écriture des informations (ou de lecture) de telle sorte que ces transitions soient écrites avec la phase qui leur correspond.

Il est évident que l'invention qui a été décrite dans son application à un disque magnétique est applicable à tout support d'enrigrestement d'information, en particulier, les disques optiques.

L'un des avantages de l'invention est le suivant:

Parmi l'ensemble des courbes $CI_{ik}$ des transitions des zones de référence, on peut réaliser la courbe $CI_{00}$ contenue dans le secteur $S_0$. La phase $\theta'_j$ de chacune des transitions $TR_{0j0}$ de celle-ci est égale à $\theta_j$ avec $\theta_{ijk}$ = 0. Si l'on considère donc une transition $TR_{ijk}$ de la zone de référence $ZRP_{ij}$, on voit que sa différence de phase avec la transition $TR_{0j0}$ de la zone de référence $ZRP_{0j}$ est égale $\theta'_j - \theta_j = (\theta_{ijk} + \theta_j) - \theta_j = \theta_{ijk}$.

La conséquence en est la suivante:

Dès que les opérations d'écriture de l'ensemble des couches $CI_{ik}$ de toutes les transitions de toutes les zones de réfrence sont terminées, on peut, pour les opérations de lecture, utiliser chacune des transitions $TR_{0j0}$, de la courbe $CI_{00}$, comme une transition servant d'index de repère (en abrégé, on dit index de repère) pour toutes les transitions des zones $ZRP_{ij}$ situées à la distance $r_j$ du centre du disque, la phase de chacune des transitions $TR_{ijk}$ de ces zones par rapport à la transition index de repère étant égale à $\theta_{ijk}$. On voit donc qu'on peut alors utiliser, à la lecture, les mêmes circuits de lecture que ceux qui sont utilisés dans les mémoires à disques ayant des actionneurs linéaires et utilisant un mode d'écriture où les transitions de même rang de toutes les zones de référence ont une phase constante.

## Revendications

1. Procédé d'écriture d'information sur un disque (DISC) où les informations sont écrites sur une pluralité de pistes au moyen d'un transducteur (TMI) déplacé en regard du support par un actionneur(ACRO, BS) suivant une première courbe donnée (TV), les informations étant définies par au moins une transition ($TR_{ijk}$) entre deux états physiques de deux domaines élémentaires voisins du disque, ce dernier comportant un repère de référence (RIND) par rapport auquel chaque transition est définie par une phase ($\theta_j$) déterminée, le procédé étant tel que, dans le but d'aligner au moins une partie des transitions ($TR_{ijk}$) selon une seconde courbe ($CI_{ik}$) prédéterminée:

1. on écrit une transition de référence ($TR_{iok}$) située sur une piste donnée (piste de numéro d'ordre 0, de rayon $r_e$) ayant une phase de référence ($\theta_{ijk}$);
2. on écrit chacune des transitions de la seconde courbe ($CI_{ik}$) avec un décalage de phase ($\theta_j$) par rapport à la phase de référence qui dépend de la position de la piste où la transition est écrite sur le disque et dont la valeur est fonction des paramètres géométriques (R, $\varphi$, D, $r_e$, P') du système d'écriture constitué par l'actionneur, le transducteur et le disque, le décalage de phase ($\theta_j$) de chaque transition ($TR_{ijk}$) écrite dépendant du rayon ($r_j$) de la piste où le transducteur écrit cette transition,

caractérisé en ce que les transitions ($TR_{ijk}$) de la seconde courbe ($CI_{ik}$) sont des segments de droite aboutés et en ce que les valeurs du décalage de phase ($\theta_j$) sont fonction de l'angle ($\varphi$) > 0 entre la direction des moyens de transduction (ENT) du transducteur et la tangente à la courbe (TV) de déplacement au point où se trouve le transducteur.

2. Procédé d'écriture selon la revendication 1, où le disque (DISC) et le transducteur (TMI) sont magnétiques le transducteur comportant un entrefer (ENT), caractérisé en ce que le décalage de phase ($\theta_j$) est fonction de l'angle ($\varphi$) entre la direction de l'entrefer et la tangente à la courbe (TV) de déplacement du transducteur au point où se trouve le centre (CENT) de l'entrefer du transducteur.

3. Procédé d'écriture selon les revendications 2 ou 3, où l'actionneur est rotatif, la première courbe étant un arc de cercle de rayon R, de centre A, caractérisé en ce que le décalage de phase $\theta_j$ est fonction du rayon R, de la distance D entre le centre 0 du disque et le centre A, et du rayon ($r_e$) de la piste où est située la transition de référence ($TR_{ijk}$).

4. Procédé selon l'une des revendications 2, 3 ou 4, caractérisé en ce que le décalage de phase ($\theta_j$) est fonction du pas (P') d'écriture des transitions.

5. Disque magnétique obtenu par le procédé d'écriture selon les revendications 3 à 5, où les informations sont contenues à l'intérieur d'une pluralité p de secteurs $S_i$, i variant de 0 à p, et contenant un sous-ensemble d'informations de position inscrites à l'intérieur de groupes de zones de référence, chaque piste étant associée à au moins deux zones de référence, chaque transition d'une zone de référence étant référencée par l'entier k, caractérisé en ce que la seconde courbe $CI_{ik}$ pour laquelle i et k sont égaux à 0 constitue une courbe de référence $CI_{00}$ formée d'une suite de transitions $TR_{0j0}$ aboutées, chaque seconde courbe $CI_{ik}$ présentant avec un arc de cercle (TV) un décalage de phase ($\theta'_j - \theta_j$).

## Patentansprüche

1. Verfahren zum aufzeichnen von Informationen auf einer Platte (DISC), auf welcher die Informationen mittels eines werden, der bezüglich des Trägers entlang einer ersten bestimmten Kurve (TV) durch ein Antriebselement (ACRO, BS) bewegt wird, wobei die Informationen durch wenigstens einen Übergang ($TR_{ijk}$) zwischen zwei physikalischen Zuständen zweier benachbarter Elementarbereiche der Platte definiert werden, wobei diese Platte ein Referenzzeichen (RIND) aufweist, in Bezug auf welches jeder Übergang durch eine bestimmte Phase ($\theta'_j$) definiert wird, und wobei das Verfahren derart ist, daß zum Ausrichten wenigstens eines Teils der Übergänge ($TR_{ijk}$) entlang einer zweiten vorbestimmten Kurve ($CI_{ik}$):

1. ein Referenzübergang ($TR_{iok}$) aufgezeichnet wird, der sich auf einer bestimmten Spur (Spur der Ordnungszahl 0 und mit dem Radius ($r_e$) befindet und eine Referenzphase ($\theta_{ijk}$) hat;
2. Jeder Übergang der zweiten Kurve ($CI_{ik}$) wird mit einer Phasenverschiebung ($\theta_j$) gegenüber der Referenzphase aufgezeichnet, die von der Position der Spur abhängt, wo der Übergang in der Platte aufgezeichnet wird, abhängt und deren Wert von den geometrischen Parametern (R, M, $\varphi$, $r_e$, P') des durch das Antriebselement, den Wandler und die Platte gebildeten Aufzeichnungssystems abhängt, wobei die Phasenverschiebung ($\theta_j$) jedes aufgezeichneten Übergangs ($TR_{ij.}$) von dem Radius ($r_j$) der Spur, wo der Wandler diesen Übergang aufzeichnet, abhängt;

dadurch gekennzeichnet, daß die Übergänge $(TR_{ijk})$ der zweiten Kurve $(Cl_{ik})$ aneinandergefügte Streckenabschnitte sind und daß die Werte der Phasenverschiebung $(\theta_j)$ von dem Winkel $(\varphi) > 0$ zwischen der Richtung der Wandlermittel (ENT) des Wandlers und der Tangente an die Kurve (TV) der Verschiebung in dem Punkt, wo sich der Wandler befindet, abhängig sind.

2. Verfahren zum Aufzeichnen nach Anspruch 1, in welchem die Platte (DISC) sowie der Wandler (TMI) magnetisch sind, wobei der Wandler einen Eisenspalt (ENT) umfaßt, dadurch gekennzeichnet, daß die Phasenverschiebung $(\theta_j)$ von dem Winkel $(\Phi)$ zwischen der Richtung des Eisenspaltes und der Tangente an die Kurve (TV) der Verschiebung des Wandlers in dem Punkt, wo sich der Eisenspaltmittelpunkt (CENT) des Wandlers befindet, abhängig ist.

3. Verfahren zum Aufzeichnen nach Anspruch 2 in welchem das Antriebselement drehbar ist, wobei die erste Kurve ein Kreisbogen mit einem Radius R und mit einem Mittelpunkt A ist, dadurch gekennzeichnet, daß die Phasenverschiebung $(\theta_j)$ von dem Radius R, dem Abstand D zwischen dem Mittelpunkt 0 der Platte und dem Mittelpunkt A und von dem Radius $(r_e)$ der Spur, wo sich der Referenzübergang $(TR_{ijk})$ befindet, abhängig ist.

4. Verfahren nach einem der Ansprüche 2, 3, dadurch gekennzeichnet, daß die Phasenverschiebung $(\theta_j)$ von dem Teilungsschritt (P') zum Aufzeichnen der Übergänge abhängig ist.

5. Magnetplatte, die durch das Verfahren zum Aufzeichnen nach den Ansprüchen 3, 4 erhalten wird, in welcher die Informationen im Inneren einer Mehrzahl p von Sektoren $S_i$, welche von 0 bis p variieren, enthalten sind, und die eine Untergruppe von Positionsinformationen enthält, welche im Inneren von Gruppen von Referenzzonen aufgezeichnet werden, wobei jede Spur wenigstens zwei Referenzzonen zugeordnet ist, jeder Übergang einer Referenzzone durch eine ganze Zahl k bezeichnet wird, dadurch gekennzeichnet, daß die zweite Kurve $Cl_{ik}$, für welche i und k gleich 0 sind, eine Referenzkurve $Cl_{00}$ bildet, welche aus einer Folge von aneinandergefügten Übergängen $TR_{0j0}$ besteht, wobei jede zweite kurve $Cl_{ik}$ mit einem Kreisbogen (TV) eine Phasenverschiebung $(\theta'_j - \theta_j)$ aufweist.

## Claims

1. Method of writing data on a disc (DISC) in which the data are written on a plurality of tracks by means of a transducer (TMI) displaced with respect to the carrier by an actuator (ACRO, BS) along a first given curve (TV), the data being defined by at least one transition $(TR_{ik})$ between two physical states of two adjacent elementary areas of the disc, this latter comprising a reference mark (RIND) with respect to which each transition is defined by a specific phase $(\theta'_j)$, the method being such that for the purpose of aligning at least a part of the transitiuns $(TR_{ijk})$ along a second predetermined curve $(Cl_{jk})$:

1. there is written a reference transition $(TR_{iok})$ situated on a given track (track of order number 0 and of radius $r_e$) having a reference phase $(\theta_{ijk})$,
2. each of the transitions of the second curve $(Cl_{jk})$ is written with a phase displacement $(\theta_j)$ with respect to the reference phase which depends on the position of the track at which the transition is written on the disc and of which the value is a function of the geometrical parameters (R, $\varphi$, D, $r_e$, P') of the writing system formed by the actuator, the transducer and the disc, the phase displacement $(\theta_j)$ of each transition $(TR_{ijk})$ written depending on the radius $(r_j)$ of the track on which the transducer writes this transition,

characterised in that the transitions $(TR_{ijk})$ of the second curve $(Cl_{jk})$ are rectilinear segments placed end $(\theta_j)$ are a function of the angel $(\varphi) > 0$ between the direction of the transduction means (ENT) of the transducer and the tangent to the curve (TV) of displacement at the point at which the transducer is positioned.

2. Writing method according to claim 1, in which the disc (DISC) and the transducer (TMI) are magnetic, the transducer comprising a gap (ENT), characterised in that the phase displacement $(\theta_j)$ is a function of the angle $(\varphi)$ between the direction of the gap and the tangent to the curve (TV) of displacement of the transducer at the point at which is situated the centre (CENT) of the gap of the transducer.

3. Writing method according to claim 2, where the actuator is rotary, the first curve being an arc of a circle of radius R, of centre A, characterised in that the phase displacement $(\theta_j)$ is a function of the radius R, of the distance D between the center 0 of the disc and the centre A, and of the radius $(r_e)$ of the track on which is located the reference transition $(TR_{ijk})$.

4. Method according to one of the claims 2, 3, characterised in that the phase displacement $(\theta_j)$ is a function of the writing pitch (P') of the transitions.

5. Magnetic disc obtained by the writing method according to claims 3, 4, in which the data are contained within a plurality p of sectors $S_i$, i varying between 0 and p, and containing a sub-set of positional data entered within groups of reference areas, each track being associated with at least two reference areas, each transition from a reference area being denoted by the integer k, characterised in that the second curve $(Cl_{jk})$ for which i and k are equal to 0, forms a reference graph $Cl_{00}$ formed by a succession of end-to-end transitions $TR_{0j0}$, each second curve $Cl_{jk}$ having a phase displacement $(\theta'_j - \theta_j)$ with an arc of a circle (TV).

FIG. 1a

$d_2$

$r_e$

$d_1$

$S_{i+1}$

$S_i$

$r_i$

DISC

TAint.

TA$_{ext.}$

$S_0$

F

FIG. 1b

SDO$_i$

DONNEES

SAD$_i$

$S_i$

INFORMATIONS
REPERAGE PISTE

FIG. 2

ZRPi4
ZRPi3
ZRPi2
ZRPi1
ZRPi0

ART
ANTERIEUR

Ax4
Ax3
Ax2
Ax1
Ax0

FIG. 3

Ax$_4$

DONNEES PISTE 3
SECTEUR $S_i$

INFORMATIONS
REPERAGE PISTE 4

ZRP$_i$4

Ax3

DONNEES PISTE 2
SECTEUR $S_i$

INFORMATIONS
REPERAGE PISTE 3

ZRP$_i$3

Ax2

DONNEES PISTE 1
SECTEUR $S_i$

INFORMATIONS
REPERAGE PISTE 2

ZRP$_i$2

Ax1

DONNEES PISTE 0
SECTEUR $S_i$

INFORMATIONS
REPERAGE PISTE 1

ZRP$_i$1

Ax0

INFORMATIONS
REPERAGE PISTE 0

ZRP$_i$0

FIG. 4   ART ANTERIEUR

FIG. 5

FIG.6

FIG.7

FIG.8

ROTATION
DISQUE

FIG. 9

7

FIG. 10

EP 0 148 077 B1

FIG. 11a

FIG. 11b

FIG. 11c

11

**FIG.12**

DONNEES:  $NP'$ = Nombre de zones
$P'$ = Pas d'écriture
$D$ = Distance OA
$R$ = Rayon arc de cercle TV
$r_e, \varphi$

**PARTIE I**
Initialisation

$$j = 0$$
$$r_{j-1} = r_e$$
$$E_{j-1} = \varphi + \frac{\pi}{2} - \text{arc cos}\left(\frac{r_e^2 + R^2 - D^2}{2 r_e R}\right)$$

$$j = NP'-1 \quad \text{OUI} \quad \boxed{\text{FIN}} \quad \text{PARTIE II}$$

NON

PARTIE III

$$j = j + 1$$

$$r_j = r_e - j \times P'$$
$$B_j = \text{arc cos}\left(\frac{r_j^2 + D^2 - R^2}{2 D \times r_j}\right) - \text{arc cos}\left(\frac{r_{j-1}^2 + D^2 - R^2}{2 D \times r_{j-1}}\right) \quad (6)$$
$$A_j = \text{arc cos}\left(\frac{R^2 + D^2 - r_{j-1}}{2 R \times D}\right) - \text{arc cos}\left(\frac{R^2 + D^2 - r_j^2}{2 R \times D}\right) \quad (5)$$
$$E_j = E_{j-1} - A_j + B_j \quad (4)$$
$$r_{j\,moy} = \frac{r_{j-1} + r_j}{2} \quad (1)$$
$$d_j = r_{j\,moy} \times \sin(|B_j|) + \frac{P'}{2}(\text{tg } E_{j-1} + \text{tg } E_j) \quad (3)$$
$$\Delta\theta_j = \frac{d_j}{r_{j\,moy}} \quad (2)$$

PARTIE IV

$$r_{j-1} = r_j$$
$$E_{j-1} = E_j$$

PARTIE VI

$$\theta_j = \sum_1^j \Delta\theta_j \quad \text{PARTIE V}$$

13

FIG. 13

FIG. 14